Europäisches Patentamt

European Patent Office

Office européen des brevets

(19)

(11) **EP 1 165 676 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.⁷: **C08K 3/34**, C08K 7/00, C08L 25/02

(21) Anmeldenummer: **00915176.2**

(22) Anmeldetag: **10.03.2000**

(86) Internationale Anmeldenummer:
**PCT/EP2000/002110**

(87) Internationale Veröffentlichungsnummer:
**WO 2000/053670 (14.09.2000 Gazette 2000/37)**

(54) **STYROLCOPOLYMERISATE MIT VERBESSERTER CHEMIKALIENBESTÄNDIGKEIT**

STYRENE COPOLYMERS WITH IMPROVED RESISTANCE TO CHEMICALS

COPOLYMERISATS DE STYRENE A RESISTANCE AMELIOREE AUX PRODUITS CHIMIQUES

(84) Benannte Vertragsstaaten:
**AT BE CH CY DE DK ES FI FR GB GR IE IT LI LU MC NL PT SE**

(30) Priorität: **11.03.1999 DE 19910917**

(43) Veröffentlichungstag der Anmeldung:
**02.01.2002 Patentblatt 2002/01**

(73) Patentinhaber: **BASF AKTIENGESELLSCHAFT 67056 Ludwigshafen (DE)**

(72) Erfinder:
• **BARGHOORN, Peter**
  **D-67169 Kallstadt (DE)**
• **FISCHER, Michael**
  **D-67071 Ludwigshafen (DE)**
• **GÖRRISSEN, Heiner**
  **D-67069 Ludwigshafen (DE)**
• **ITTEMANN, Peter**
  **D-68623 Lampertheim (DE)**
• **NIESSNER, Norbert**
  **D-67159 Friedelsheim (DE)**

(74) Vertreter: **Bardehle, Heinz, Dipl.-Ing.
Patent- und Rechtsanwälte
Bardehle . Pagenberg . Dost .
Altenburg . Geissler
Theodor-Heuss-Anlage 12
68165 Mannheim (DE)**

(56) Entgegenhaltungen:
DE-A- 3 806 548          DE-A- 19 630 062

**Beschreibung**

Die Erfindung betrifft Styrolcopolymerisate mit verbesserter Chemikalienbeständigkeit.

Styrolcopolymerisate zeichnen sich durch sehr gute Eigenschaften aus und sind daher vielfältig einsetzbar. Für verschiedene Anwendungen ist eine Verbesserung ihres Eigenschaftsprofils jedoch wünschenswert. Eine solche Verbesserung kann durch Zugabe von weiteren Komponenten zu einer Styrolcopolymerisatmischung erreicht werden.

Aus EP-A 0 590 390 sind thermoplastische Formmassen bekannt, die auch nach der Verarbeitung zum fertigen Formteil einen verbesserten Farbton aufweisen. Eine solche Verbesserung des Rohtons der thermoplastischen Formmassen wird durch Zusatz von Zeolithen oder Schichtsilikaten des Kaolin-, Serpentin- und Bentonit-Typs erreicht.

Aus H. Domininghaus, Plastics for Engineers, Carl Hanser Verlag, München, 1993, Kap. 17, Seite 213 ist bekannt, daß die Chemikalienbeständigkeit von SAN (Styrol-Acrylnitril-Copolymeren) mit steigendem Acrylnitrilgehalt ansteigt.

Aufgabe der vorliegenden Erfindung ist es, die Chemikalienbeständigkeit von Styrolcopolymerisaten weiter zu verbessern, insbesondere von Styrolcopolymerisaten mit niedrigen Acrylnitrilgehalten.

Diese Aufgabe wird durch die Verwendung von Schichtsilikaten zur Verbesserung der Chemikalienbeständigkeit, Verringerung der Quellung und Verbesserung der Spannungsrißbeständigkeit von Styrolcopolymerisaten gelöst.

Durch eine Verbesserung der Chemikalien beständigkeit, eine geringe Quellung und eine verbesserte Spannungsrißbeständigkeit der Styrolcopolymerisate kann die Einsatzbreite dieser Polymerisate erweitert werden.

Durch die erfindungsgemäße Verwendung von Schichtsilikaten in Styrolcopolymerisaten wird insbesondere die Chemikalienbeständigkeit gegenüber Chemikalien, ausgewählt aus Alkoholen, wie Methanol, Ethanol, Isopropanol, $C_3$- bis $C_8$-Alkanen, Benzin, Superbenzin, Diesel, halogenierten Kohlenwasserstoffen, Salzen des Hypochlorits und Natriumdichlorisocyanat-Dihydrat verbessert.

Geeignete Schichtsilikate sind beispielsweise in Hollemann, Wiberg, Lehrbuch der anorganischen Chemie, Walter de Gruyter, Berlin, New York 1985, Seiten 771 bis 776, aufgeführt. Vorzugsweise werden Schichtsilikate ausgewählt aus Kaolinit-, Serpentin-Typen, Pyrophyllit, glimmerartigen Silikaten und Glimmer eingesetzt, ganz besonders bevorzugt ist Glimmer.

Dabei sind unter Styrolcopolymerisaten Copolymerisate zu verstehen, die aus Styrol oder Styrolderivaten und Comonomeren und gegebenenfalls weiteren Komponenten aufgebaut sind.

Bevorzugt ist die Verwendung von Schichtsilikaten in Styrolcopolymerisaten, die (das Schichtsilikat eingeschlossen) aus den Komponenten A, C und gegebenenfalls B, D und E aufgebaut sind, mit:

a: 20 bis 100 Gew.-%, bezogen auf die Summe der Komponenten A + B, einer Hartkomponente aus einem oder mehreren Copolymerisaten von Styrol und/oder α-Methylstyrol mit Acrylnitril, wobei der Anteil an Acrylnitril 10 bis 50 Gew.-% beträgt, als Komponente A,

b: 0 bis 80 Gew.-%, bezogen auf die Summe der Komponenten A + B, mindestens eines Propfcopolymerisats B aus

    b1: 10 bis 90 Gew.-% mindestens einer kautschukelastischen teilchenförmigen Pfropfgrundlage mit einer Glasübergangstemperatur unter 0°C als Komponente B 1 und

    b2: 10 bis 90 Gew.-% mindestens einer Pfropfauflage aus Polystyrol oder einem Copolymerisat von Styrol und/oder α-Methylstyrol mit Acrylnitril, wobei der Anteil an Acrylnitril 10 bis 50 Gew.-% beträgt, als Komponente B2,

    wobei die Summe der eingesetzten Komponenten A + B 10 bis 100 Gew.-Teile, bezogen auf die Gesamtmasse der eingesetzten Komponenten, beträgt,

c: 0,05 bis 5 Gew.-Teile, bezogen auf die Gesamtmasse der eingesetzten Komponenten, eines Schichtsilikats, als Komponente C,

d: 0 bis 90 Gew.-Teile, bezogen auf die Gesamtmasse der eingesetzten Komponenten, mindestens eines Polycarbonates als Komponente D,

e: 0 bis 20 Gew.-Teile, bezogen auf die Gesamtmasse der eingesetzten Komponenten, weiterer üblicher Hilfs- und Füllstoffe als Komponente E.

Zur Ausrüstung mit Schichtsilikaten zur Erhöhung der Chemikalienbeständigkeit geeignete Styrolcopolymerisate mit den Komponenten A, B, D und E sind dabei beispielsweise in DE-A 29 01 576 und DE-A 38 21 481 beschrieben.

In den Styrolcopolymerisaten beträgt der Anteil der Komponente A, bezogen auf die Summe der Komponenten A + B, vorzugsweise 40 bis 90 Gew.-%, besonders bevorzugt 55 bis 80 Gew.-%. Der Anteil der Komponente B beträgt, bezogen auf die Summe der Komponenten A + B, vorzugsweise 15 bis 60 Gew.-%, besonders bevorzugt 20 bis 45 Gew.-%, wobei die Summe der Komponenten A + B bevorzugt 10 bis 80 Gew.-Teile, besonders bevorzugt 12 bis 70 Gew.-Teile, bezogen auf die Gesamtmasse der eingesetzten Komponenten, beträgt. Der Anteil der Komponente C beträgt, bezogen auf die Gesamtmasse der eingesetzten Komponenten, vorzugsweise 0,15 bis 5 Gew.-Teile, besonders bevorzugt 0,15 bis 3 Gew.-Teile. Der Anteil der Komponente D beträgt, bezogen auf die Gesamtmasse der eingesetzten Komponenten, vorzugsweise 20 bis 90 Gew.-Teile, besonders bevorzugt 33 bis 90 Gew.-Teile, ganz besonders bevorzugt 60 bis 90 Gew.-Teile. Der Anteil der Komponente E beträgt, bezogen auf die Gesamtmasse der eingesetzten Komponenten, vorzugsweise 0 bis 15 Gew.-Teile, besonders bevorzugt 0 bis 12 Gew.-Teile.

In Komponente A beträgt der Anteil an Acrylnitril vorzugsweise weniger als 28 Gew.-%, besonders bevorzugt 18 bis 27 Gew.-%.

In Komponente B beträgt der Anteil der Komponente B1 vorzugsweise 20 bis 80 Gew.-%, besonders bevorzugt 25 bis 75 Gew.-%, der Anteil der Komponente B2 vorzugsweise 20 bis 80 Gew.-%, besonders bevorzugt 25 bis 75 Gew.-%. Dabei beträgt der Anteil an Acrylnitril in Komponente B2 vorzugsweise weniger als 28 Gew.-%, besonders bevorzugt 18 bis 27 Gew.-%.

Als Komponente C geeignete Schichtsilikate sind vorzugsweise ausgewählt aus Kaolinit-, Serpentin-Typen, Pyrophyllit, glimmerartigen Silikaten und Glimmer, wobei Glimmer besonders bevorzugt ist. Dabei sollen im Sinne der vorliegenden Erfindung unter Kaolinit-Typen auch Kaolin und unter glimmerartigen Silikaten auch Bentonit verstanden werden.

**Komponente A**

Komponente A weist vorzugsweise eine Viskositätszahl VZ (ermittelt nach DIN 53726 bei 25°C, 0,5 Gew.-% in Dimethylformamid) von 50 bis 120 ml/g, besonders bevorzugt 52 bis 110 ml/g und insbesondere 55 bis 100 ml/g auf. Besonders bevorzugt handelt es sich um ein Styrol/Acrylnitril-Copolymerisat. Derartige Copolymerisate erhält man in bekannter Weise durch Masse-, Lösungs-, Suspensions-, Fällungs- oder Emulsionspolymerisation, wobei Masse- und Lösungspolymerisation bevorzugt sind. Einzelheiten dieser Verfahren sind beispielsweise im Kunststoffhandbuch, Herausgeber R. Vieweg und G Daumiller, Band V "Polystyrol", Carl-Hanser-Verlag München 1969, Seite 118 ff. beschrieben.

**Komponente B**

Komponente B ist ein Pfropfcopolymerisat mit einer kautschukelastischen teilchenförmigen Pfropfgrundlage mit einer Glasübergangstemperatur unter 0°C. Dabei kann die Pfropfgrundlage aus allen bekannten geeigneten kautschukelastischen Polymeren ausgewählt sein. Vorzugsweise handelt es sich um ABS (Acrylnitril/Butadien/Styrol)-, ASA (Acrylnitril/Styrol/Alkylacrylat)-Kautschuke, worin anstelle von Styrol auch ein Styrolderivat und anstelle von Butadien auch ein anderes Dien eingesetzt werden kann, oder EPDM-, Siloxan- oder andere Kautschuke.

Vorzugsweise ist Komponente B1 mindestens ein (Co)polymerisat aus

b11: 60 bis 100 Gew.-%, vorzugsweise 70 bis 100 Gew.-% mindestens eines konjugierten Diens, eines $C_{1-10}$-Alkylacrylats oder Gemischen davon als Komponente B11,

b12: 0 bis 30 Gew.-%, vorzugsweise 0 bis 25 Gew.-% mindestens eines von Komponente B11 verschiedenen monoethylenisch ungesättigten Monomeren als Komponente B12 und

b13: 0 bis 10 Gew.-%, vorzugsweise 0 bis 6 Gew.-% mindestens eines vemetzenden Monomeren als Komponente B 13.

Als Komponente B11 kommen konjugierte Diene, insbesondere Butadien, Isopren, Chloropren oder Gemische davon wie auch die nachstehend aufgeführten $C_{1-10}$-Alkylacrylate, bevorzugt $C_{1-8}$-Alkylacrylate, und Gemische davon in Betracht. Bevorzugt verwendet man Butadien oder Isopren oder deren Gemische, speziell Butadien, oder n-Butylacrylat.

Gegebenenfalls können als Komponente B 12 Monomere enthalten sein, die die mechanischen und thermischen Eigenschaften des Kerns in einem gewissen Bereich variieren. Als Beispiele derartiger monoethylenisch ungesättigter Comonomere können Styrol, substituierte Styrole, Acrylnitril, Methacrylnitril, Acrylsäure, Methacrylsäure, Dicarbonsäuren wie Maleinsäure und Fumarsäure sowie deren Anhydride wie Maleinsäureanhydrid, Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid, $C_{1-10}$-Alkylester der Acrylsäure wie Methylacrylat, Ethylacrylat, n-Propylacrylat, i-Propylacrylat, n-Butylacrylat, Isobutylacrylat, sec.-Butylacrylat, tert.-Butyl-acrylat, Ethylhexylacrylat, die entsprechenden $C_{1-10}$-Alkylester der Methacrylsäure sowie Hydroxyethylacrylat, aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat sowie 2-Phenoxyethylmethacrylat, N-substituierte Maleinimide wie N-Methyl-, N-Phenyl- und N-Cyclohexylmaleinimid, ungesättigte Ether wie Vinylmethylether sowie Gemische davon genannt werden.

Bevorzugt werden Styrol, $\alpha$-Methylstyrol, n-Butylacrylat, Methylmethacrylat, Acrylnitril oder deren Gemische als Komponente B12 eingesetzt, insbesondere Styrol und n-Butylacrylat oder deren Gemische, speziell Styrol. Sofern eine Komponente B12, jedoch keine Komponente B13 eingesetzt wird, beträgt der Anteil der Komponente B 11 vorzugsweise 70 bis 99,9 Gew.-%, besonders bevorzugt 90 bis 99 Gew.-% und der Anteil der Komponente B12 0,1 bis 30 Gew.-%, besonders bevorzugt 1 bis 10 Gew.-%. Besonders bevorzugt sind Butadien/Styrol- und n-Butylacrylat/Styrol-Copolymere in dem angegebenen Mengenbereich.

Beispiele für vernetzende Monomere der Komponente B13 sind Divinylverbindungen wie Divinylbenzol, Diallylverbindungen wie Diallylmaleat, Allylester der Acryl- und Methacrylsäure, Dihydrodicyclopentadienylacrylat (DCPA), Divinylester von Dicarbonsäuren wie der Bernsteinsäure und Adipinsäure, Diallyl- und Divinylether bifunktioneller Alkohole wie des Ethylenglykols und Butan-1,4-diols.

Als Pfropfauflage B2 setzt man vorzugsweise Styrol, $\alpha$-Methylstyrol, sowie mit $C_1$-$C_8$-Alkyl kernalkylierte Styrole ein. Styrol ist besonders bevorzugt. Es können aber auch Mischungen der genannten Styrole eingesetzt werden.

Weiterhin kann B2 ein oder mehrere weitere, monoethylenisch ungesättigte Comonomere enthalten. Bevorzugte Comonomere sind Acrylnitril, Methylmethacrylat, Glycidylacrylat und -methacrylat, Acrylamid und Methacrylamid.

Bevorzugte Pfropfauflagen B2 sind beispielsweise Polystyrol und Copolymere aus Styrol und/oder $\alpha$-Methylstyrol mit Acrylnitril und/oder Methylmethacrylat.

Besonders bevorzugt beträgt der Anteil an Styrol und/oder 2-Methylstyrol, oder deren Summe, mindestens 50 Gew.-%, ganz besonders bevorzugt mindestens 60 Gew.-%.

In einer weiteren Ausführungsform können auch Pfropfkautschuke verwendet werden, wie sie zum Beispiel in DE-A-4 011 163 verwendet werden. Diese Pfropfkautschuke sind dem Fachmann als sogenannte Säure-Base-Kautschuke bekannt.

Üblicherweise werden die Pfropfcopolymerisate B nach dem Verfahren der Emulsionspolymerisation hergestellt. Dabei polymerisiert man in der Regel bei einer Temperatur von 20 bis 100°C, bevorzugt 30 bis 80°C. Häufig werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise verwendet man die Alkalimetallsalze, insbesondere die Natrium- oder Kaliumsalze von Alkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage eingesetzten Monomere, eingesetzt.

Vorzugsweise verwendet man zur Herstellung der Dispersion soviel Wasser, daß die fertige Dispersion einen Feststoffgehalt von 20 bis 50 Gew.-% aufweist. Üblicherweise wird bei einem Wasser/Monomeren-Verhältnis von 2:1 bis 0,7:1 gearbeitet.

Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumperoxodisulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren, eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie Ethylhexylthioglycolat, n- oder t-Dodecylmercaptan oder andere Mercaptane, Terpinole und dimeres Methylstyrol oder andere zur Regelung des Molekulargewichts geeignete Verbindungen mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie $Na_2HPO_4$/$NaH_2PO_4$, Natriumhydrogencarbonat oder Puffer auf Basis Citronensäure/Citrat, mitverwenden. Regler und Puffersubstanzen werden in den üblichen Mengen eingesetzt, so daß sich nähere Angaben hierzu erübrigen.

Man kann die Pfropfgrundlage in einer besonderen Ausführungsform auch durch Polymerisation der Monomeren B1 in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

In einer anderen bevorzugten Ausführungsform kann man die Pfropfgrundlage B1 im sogenannten Zulaufverfahren herstellen. Bei diesem Verfahren wird ein bestimmter Anteil der Monomeren vorgelegt und die Polymerisation gestartet, wonach man den Rest der Monomeren ("Zulaufanteil") B1 als Zulauf während der Polymerisation zufügt. Die Zulaufparameter (Gestalt des Gradienten, Menge, Dauer, etc.) hängen von den anderen Polymerisationsbedingungen ab. Sinngemäß gelten auch hier die zur Zugabeweise des Radikalstarters bzw. Emulgators gemachten Ausführungen.

Weiterhin eigenen sich auch Pfropfcopolymerisate mit mehreren "weichen" und "harten" Schalen, wie sie beispielsweise in EP-A 0 534 212 beschrieben werden.

Die genauen Polymerisationsbedingungen, insbesondere Art, Menge und Dosierung des Emulgators und der anderen Polymerisationshilfsstoffe werden bevorzugt so gewählt, daß der erhaltene Latex des Pfropfcopolymerisates B eine mittlere Teilchengröße, definiert durch den $d_{50}$-Wert der Teilchengrößenverteilung, von 80 bis 800 nm, bevorzugt 80 bis 600 nm und besonders bevorzugt 85 bis 400 nm aufweist.

Gemäß einer Ausführungsform stimmt man die Reaktionsbedingungen so aufeinander ab, daß die Polymerisat-Teilchen eine bimodale Teilchengrößenverteilung aufweisen, also eine Größenverteilung mit zwei mehr oder weniger ausgeprägten Maxima.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren, welche den Kern aufbauen, bis zu einem Umsatz von üblicherweise mindestens 90, bevorzugt größer 95 %, bezogen auf die eingesetzten Monomeren. Dieser Umsatz ist in der Regel nach 4 bis 20 Stunden erreicht. Der erhaltene Kautschuklatex hat eine mittlere Teilchengröße $d_{50}$ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von ($C_1$-$C_4$-Alkyl) estern der Acrylsäure, vorzugsweise von Ethylacrylat, mit 0,1 bis 10 Gew.-% polare Polymerisate bildenden Monomeren, wie Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 Gew.-% Ethylacrylat und 4 Gew.-% Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im allgemeinen zwischen 3 und 40 Gew.-% liegen. Bei der Agglomeration werden 0,2 bis 20, vorzugsweise 1 bis 5 Gew. -Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Außer mittels einer Acrylesterpolymerisat-Dispersion kann der Kautschuklatex auch durch andere Agglomeriermittel wie Essigsäureanhydrid agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der erhaltene teilagglomerierte Kautschuklatex ist verhältnismäßig stabil, so daß er ohne weiteres gelagert und transportiert werden kann, ohne daß Koagulation eintritt.

Um eine bimodale Teilchengrößenverteilung des Pfropfcopolymerisates B zu erzielen, ist es auch möglich, zwei verschiedene Pfropfcopolymerisate B' und B", die sich in ihrer mittleren Teilchengröße unterscheiden, getrennt voneinander in üblicher Weise herzustellen und die Pfropfcopolymerisate B' und B" im gewünschten Mengenverhältnis zusammenzugeben.

Die Herstellung der Pfropfauflage B2 kann unter den gleichen Bedingungen wie die Herstellung der Pfropfgrundlage B1 erfolgen, wobei man die Auflage B2 in einem oder mehreren Verfahrensschritten herstellen kann. Beispielsweise kann man bei einer zweistufigen Pfropfung zunächst Styrol bzw. α-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfpolymerisate B sind in DE-A 12 60 135 und 31 49 358 sowie EP-A-0 735 063 zu entnehmen.

Es ist vorteilhaft, die Pfropfpolymerisation auf die Pfropfgrundlage B1 wiederum in wäßriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage B1 verwendeten Emulgatoren bzw. Initiatoren nicht identisch sein.

So kann es z.B. zweckmäßig sein, als Initiator für die Herstellung der Pfropfgrundlage B1 ein Persulfat zu verwenden, zur Polymerisation der Pfropfhülle B2 jedoch ein Redoxinitiatorsystem einzusetzen. Im übrigen gilt für die Wahl von Emulgator, Initiator und Polymerisationshilfsstoffen das bei der Herstellung der Pfropfgrundlage B1 Gesagte. Das aufzupfropfende Monomerengemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage B1 nicht gepfropfte Polymere aus den Monomeren B2 entstehen, werden die Mengen, die in der Regel unter 10 Gew.-% von B2 liegen, der Masse der Komponente B zugeordnet.

**Komponente C**

Die Komponente C ist ein Schichtsilikat. Geeignete Schichtsilikate sind beispielsweise in Hollemann, Wiberg, Lehrbuch der anorganischen Chemie, Walter de Gruyter, Berlin, New York 1985, Seiten 771 bis 776, aufgeführt.

Vorzugsweise werden Serpentin-Typen wie Chrytosil oder Antigorit, Kaolinit-Typen wie Dikkit bzw. Nakrit oder Halloysit, Pyrophyllit, glimmerartige Silikate der Vermiculit-, Illit- oder Montmorillonit/Beidellit-Reihe wie Montmorillonit sowie Glimmer, ein Alumosilikat wie Muskovit, Phlogopit oder Biotit, eingesetzt. Ganz besonders bevorzugt ist Glimmer. Unter Kaolinit-Typen soll dabei auch Kaolin, dessen Hauptmineral Kaolinit ist, und unter glimmerartigen Silikaten auch Bentonit, dessen Hauptmineral Montmorillonit ist, verstanden werden.

**Komponente D**

Unter Polycarbonaten D sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl) alkene, Bis-(hydroxyphenyl)ether. Es können aber auch alle anderen, für die Herstellung von Polycarbonaten geeigneten, Bisphenole eingesetzt werden, wie sie u.a. in der Monographie H. Schnell, Chemistry und Physics of Polycarbonates, Interscience Publishers, New York, 1964, in US 2,999,835 und in DE-A 22 48 817 beschrieben sind. Besonders bevorzugt sind Polycarbonate auf der Basis von 2,2-Bis-(4-hydroxyphenyl)propan. Die Synthese der Polycarbonate wird beispielsweise in US 2,999,835 und GB-A 7 72 627 beschrieben. Die Komponente D weist relative Viskositäten $\eta_{spec/c}$ im Bereich von 1,1 bis 1,5 [ml/g] auf, entsprechend mittleren Molgewichten $\overline{M}_n$ im Bereich von 25.000 bis 200.000.

**Komponente E**

Als Komponente E können weitere übliche Hilfs- und Füllstoffe eingesetzt werden. Derartige Stoffe sind beispielsweise Gleit- oder Entformungsmittel, Wachse, Pigmente, Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide sowie Siliconöle, Montanwachse und solche auf Basis von Polyethylen und Polypropylen.

Pigmente sind beispielsweise Titandioxid, Phthalocyanine, Ultramarinblau, Eisenoxide oder Ruß, sowie die gesamte Klasse der organischen Pigmente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Geeignete Flammschutzmittel sind beispielsweise Antimonoxide wie $Sb_2O_3$ und/oder halogenierte organische Verbindungen.

Geeignete Antioxidantien sind insbesondere sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinonanaloge und substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, etwa Topanol® oder Irganox.

Zusammen mit den zuvor beispielhaft genannten phenolischen Antioxidantien können sogenannte Costabilisatoren mitverwendet werden, insbesondere phosphoroder schwefelhaltige Costabilisatoren. Solche P- oder S-haltigen Costabilisatoren sind dem Fachmann bekannt und handelsüblich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Als Beispiele für faserförmige bzw. pulverförmige Füllstoffe seien Kohlenstoffoder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Die einzelnen Zusatzstoffe werden in den jeweils üblichen Mengen verwendet, so daß sich nähere Angaben hierzu erübrigen.

Ein weiterer Gegenstand der vorliegenden Erfindung sind thermoplastische Formmassen, aufgebaut aus den Komponenten:

a: 20 bis 100 Gew.-%, bezogen auf die Summe der Komponenten A + B, einer Hartkomponente aus einem oder mehreren Copolymerisaten von Styrol und/oder $\alpha$-Methylstyrol mit Acrylnitril, wobei der Anteil an Acrylnitril weniger als 28 Gew.-% beträgt, als Komponente A,

b: 0 bis 80 Gew.-%, bezogen auf die Summe der Komponenten A + B, mindestens eines Propfcopolymerisats B aus

    b1: 10 bis 90 Gew.-% mindestens einer kautschukelastischen teilchenförmigen Pfropfgrundlage mit einer Glasübergangstemperatur unter 0°C als Komponente B1 und

    b2: 10 bis 90 Gew.-% mindestens einer Pfropfauflage aus Polystyrol oder einem Copolymerisat von Styrol und/oder $\alpha$-Methylstyrol mit Acrylnitril, wobei der Anteil an Acrylnitril weniger als 28 Gew.-% beträgt, als Komponente B2,

    wobei die Summe der eingesetzten Komponenten A + B 10 bis 100 Gew.-Teile, bezogen auf die Gesamtmasse der eingesetzten Komponenten, beträgt,

c: 0,05 bis 5 Gew.-Teile, bezogen auf die Gesamtmasse der eingesetzten Komponenten, eines Schichtsilikats, als Komponente C,

d: 0 bis 90 Gew.-Teile, bezogen auf die Gesamtmasse der eingesetzten Komponenten, mindestens eines Polycarbonates als Komponente D,

e: 0 bis 20 Gew.-Teile, bezogen auf die Gesamtmasse der eingesetzten Komponenten, weiterer üblicher Hilfs- und Füllstoffe als Komponente E.

Die bevorzugten Anteile der Komponenten A bis E in dem Styrolcopolymerisat entsprechen den vorstehend (zu Beginn) aufgeführten bevorzugten Anteilen.

Trotz des geringen Acrylnitrilgehaltes zeigen die erfindungsgemäßen thermoplastischen Formmassen eine hervorragende Chemikalienbeständigkeit.

## Herstellung der Formmassen

Die Herstellung der Styrolcopolymerisate mit verbesserter Chemikalienbeständigkeit, aufgebaut aus den Komponenten A, C und gegebenenfalls B, D und E mit:

a: 20 bis 100 Gew.-%, bezogen auf die Summe der Komponenten A + B, einer Hartkomponente aus einem oder mehreren Copolymerisaten von Styrol und/oder $\alpha$-Methylstyrol mit Acrylnitril, wobei der Anteil an Acrylnitril 10 bis 50 Gew.-% beträgt, als Komponente A,

b: 0 bis 80 Gew.-%, bezogen auf die Summe der Komponenten A + B, mindestens eines Propfcopolymerisats B aus

    b1: 10 bis 90 Gew.-% mindestens einer kautschukelastischen teilchenförmigen Pfropfgrundlage mit einer Glasübergangstemperatur unter 0°C als Komponente B1 und

    b2: 10 bis 90 Gew.-% mindestens einer Pfropfauflage aus Polystyrol oder einem Copolymerisat von Styrol und/oder $\alpha$-Methylstyrol mit Acrylnitril, wobei der Anteil an Acrylnitril 10 bis 50 Gew.-% beträgt, als Komponente B2,

    wobei die Summe der eingesetzten Komponenten A + B 10 bis 100 Gew.-Teile, bezogen auf die Gesamtmasse der eingesetzten Komponenten, beträgt,

c: 0,05 bis 5 Gew.-Teile, bezogen auf die Gesamtmasse der eingesetzten Komponenten, eines Schichtsilikats, besonders bevorzugt Glimmer, als Komponente C,

d: 0 bis 90 Gew.-Teile, bezogen auf die Gesamtmasse der eingesetzten Komponenten, mindestens eines Polycarbonates als Komponente D,

e: 0 bis 20 Gew.-Teile, bezogen auf die Gesamtmasse der eingesetzten Komponenten, weiterer üblicher Hilfs- und Füllstoffe als Komponente E,

erfolgt vorzugsweise durch separates Herstellen der einzelnen Komponenten. Die Komponente A wird mit der Komponente C entweder vermengt, gegebenenfalls mit den Komponenten B, D und E innig vermischt und vorzugsweise extrudiert, oder alle Komponenten werden in einen Extruder dosiert.

In einer bevorzugten Ausführungsform werden A und C in einem Taumelmischer vermengt und gegebenenfalls mit der Komponente B und gegebenenfalls D und E in einem Extruder innig vermischt. Anschließend wird die erhaltene Formmasse vorzugsweise extrudiert, schnell abgekühlt und granuliert.

Die nach dem erfindungsgemäßen Verfahren hergestellten aus den Komponenten A, C und gegebenenfalls B, D und E aufgebauten Styrolcopolymerisate mit erhöhter Chemikalienbeständigkeit weisen vorzugsweise einen Anteil an Acrylnitril von weniger als 28 Gew.-%, besonders bevorzugt 18 bis 27 Gew.-%, in den Komponenten A und gegebenenfalls B2, bezogen auf die jeweilige Komponente, auf.

Die bevorzugten Anteile der Komponenten A bis E in dem Styrolcopolymerisat entsprechen den vorstehend (zu Beginn) aufgeführten bevorzugten Anteilen.

Die nachfolgenden Beispiele erläutern die Erfindung zusätzlich.

**Beispiele**

1. Herstellung des Pfropfcopolymerisates B

1.1. Herstellung der Pfropfgrundlage B1

1.1.1 Polybutadien-Kautschuk als Pfropfgrundlage (K1, Tabelle 1)

43120 g Butadien werden in Gegenwart von 432 g tert.-Dodecylmercaptan (TDM), 311 g Kaliumsalz von $C_{12}$-$C_{20}$-Fettsäuren, 82 g Kaliumpersulfat, 147 g Natriumhydrogencarbonat und 58400 g Wasser bei 65°C zu einem Polybutadienlatex polymerisiert. Im einzelnen wurde verfahren wie in der EP-A-0 062 901, Bsp. 1, S. 9, Z. 20 - S. 10, Z. 6 beschrieben. Der Umsatz betrug 95 % oder darüber. Die mittlere Teilchengröße $d_{50}$ des Latex betrug 80 bis 120 nm.

Zur Agglomeration des Latex wurden 35000 g des erhaltenen Latex bei 65°C durch Zugabe von 2700 g einer Dispersion (Feststoffgehalt 10 Gew.-%) aus 96 Gew.-% Ethylacrylat und 4 Gew.-% Methacrylsäureamid agglomeriert (partielle Agglomeration).

1.1.2 n-Butacrylat-Polymer als Pfropfgrundlage (K2, Tabelle 1)

Bei Verwendung eines n-Butylacrylat-Polymers als Pfropfgrundlage B1 wird wie in EP-A-0 735 063, Beispiele V1 und V2 vorgegangen.

1.2. Herstellung des Pfropfcopolymerisates B (Pfropfung von K1 oder K2)

Dem agglomerierten Latex (K1 oder K2) wurden 9000 g Wasser, 130 g Kaliumsalz von $C_{12}$-$C_{20}$-Fettsäuren und 17 g Kaliumperoxodisulfat zugefügt. Anschließend wurden die in Tabelle 2 angegebenen Monomerenmischungen bei 75°C innerhalb von 4 Stunden unter Rühren zugefügt. Der Umsatz, bezogen auf die Pfropfmonomeren, war nahezu quantitativ.

Die erhaltene Dispersion wurde mit einer wässrigen Dispersion eines Antioxidans versetzt und anschließend durch Zugabe einer Magnesiumsulfatlösung koaguliert und getrocknet.

Tabelle 1:

| Pfropfgrundlage B1 | | |
|---|---|---|
| Beispiel | K1 | K2 |
| Monomere [Gew.-%] | | |
| Butadien | 100 | 0 |
| Vemetzer | 0 | 2 |
| n-Butylacrylat | 0 | 98 |
| Eigenschaften: | | |

Tabelle 1: (fortgesetzt)

| Pfropfgrundlage B1 | | |
|---|---|---|
| Beispiel | K1 | K2 |
| Quellungsindex | 32 | |
| Gelgehalt [%] | 70 | |
| K1: Poly(butadien)-Kautschuk | | |
| K2: Poly(butylacrylat)-Kautschuk | | |

Tabelle 2:

| Pfropfpolymerisat B (Ba, Bb) | | |
|---|---|---|
| Komponente | Ba | Bb |
| Pfropfgrundlage aus Beispiel | K2 | K1 |
| Monomere [Gew.-%] der Propfauflage B2 | | |
| Styrol | 75 | 80 |
| Acrylnitril | 25 | 20 |
| Ba: Poly(butylacrylat)-Pfropfkautschuk mit einer Pfropfauflage aus Styrol/Acrylnitril 75/25 | | |
| Bb: Poly(butadien)-Pfropfkautschuk mit einer Pfropfauflage aus Styrol/Acrylnitril 80/20 | | |

2. Herstellung der Polymerisate A

Die thermoplastischen Polymerisate A wurden nach dem Verfahren der kontinuierlichen Lösungspolymerisation hergestellt, wie es im Kunststoff-Handbuch, Hrg. R. Vieweg und G. Daumiller, Band V "Polystyrol", Carl-Hanser-Verlag München 1969, S 122 - 124, beschrieben ist. Tabelle 3 faßt die Zusammensetzungen und Eigenschaften zusammen.

Tabelle 3:

| thermoplastische Polymerisate A (Aa, Ab) | | |
|---|---|---|
| Komponente | Aa | Ab |
| Monomeren [Gew.-%] | | |
| Styrol | 75 | 76 |
| Acrylnitril | 25 | 24 |
| Viskositätszahl VZ [ml/g] | 81 | 67 |
| Aa, Ab: Poly(styrol-co-acrylnitril) | | |

3. Komponente C

Als Komponente C wurde Glimmer SX 400® von Microfine Materials eingesetzt.

4. Herstellung von Abmischungen aus den Komponenten A, B und C

4.1 Abmischung der Komponenten A und C

Die Komponente A wurde mit der Komponente C in einem Taumelmischer vermengt.

4.2 Abmischung mit dem Pfropfkautschuk B nach vorheriger Trocknung

Der Pfropfkautschuk B wurde mit der Mischung der Komponenten A und C in einem Extruder, Typ ZSK 30 von Werner und Pfleiderer, bei 250°C und 250 min⁻¹ bei einem Durchsatz von 10 kg/h innig vermischt. Die Formmasse wurde extrudiert und die schmelzflüssige Polymermischung wurde einer schnellen Abkühlung unterworfen, in dem sie in ein Wasserbad von 30°C eingeleitet wurde. Die erstarrte Formmasse wurde granuliert.

In Tabelle 4 sind verschiedene Abmischungen der Komponenten A, B und C aufgeführt. 1V und 5V sind Vergleichsbeispiele, in denen die Komponente C fehlt

Tabelle 4:

| Abmischungen | | | | | |
|---|---|---|---|---|---|
| Abmischung | Komponente Aa [Gew.-Teile] | Komponente Ab [Gew.-Teile] | Komponente Ba [Gew.-Teile] | Komponente Bb [Gew.-Teile] | Komponente C [Gew.-Teile] |
| 1V | 70 | | 30 | | |
| 2 | 70 | | 30 | | 0,5 |
| 3 | 70 | | 30 | | 1,5 |
| 4 | 70 | | 30 | | 3 |
| 5V | | 70 | | 30 | |
| 6 | | 70 | | 30 | 1,5 |

5. Prüfungen

Messung der Benzinbeständigkeit:

Lagerung in Superbenzin bei 23°C
Probekörper: Zugstab 170x10x4 mm (ca. 10,0 g)
Messung der Gewichtsaufnahme in Gew.-% nach 1d, 2d, 3d, 4d (keine DIN-Norm)

Tabelle 5:

| Ergebnisse | | | | |
|---|---|---|---|---|
| Beispiel | Gewichtsaufnahme (Gew.-%) 1d | Gewichtsaufnahme (Gew.-%) 2d | Gewichtsaufnahme (Gew.-%) 3d | Gewichtsaufnahme (Gew.-%) 4d |
| 1V | 48 | 82 | 113 | |
| 2 | 12 | 20 | 31 | |
| 3 | 10 | 15 | 20 | |
| 4 | 10 | 17 | 23 | |
| 5V | 17,3 | 26,6 | 35,4 | 42,3 |
| 6 | 13,5 | 20,2 | 25,9 | 30,9 |

**Patentansprüche**

1. Verwendung von Schichtsilikaten zur Verbesserung der Chemikalienbeständigkeit, Verringerung der Quellung und Verbesserung der Spannungsrißbeständigkeit von Styrolcopolymerisaten.

2. Verwendung nach Anspruch 1, **dadurch gekennzeichnet, daß** die Chemikalienbeständigkeit gegenüber Chemikalien ausgewählt aus Alkoholen, $C_3$- bis $C_8$-Alkanen, Benzin, Superbenzin. Diesel, halogenierten Kohlenwasserstoffen, Salzen des Hypochlorits und Natriumdichlorisocyanat-Dihydrat verbessert wird.

3. Verwendung nach Anspruch 1 oder 2, **dadurch gekennzeichnet, daß** Schichtsilikate ausgewählt aus Kaolinit-, Serpentin-Typen, Pyrophyllit und glimmerartigen Silikaten und Glimmer eingesetzt werden.

4. Verwendung nach einem der Ansprüche 1 bis 3, **dadurch gekennzeichnet, daß** die Styrolcopolymerisate aus den Komponenten A, C und gegebenenfalls B, D und E aufgebaut sind, mit:

a: 20 bis 100 Gew.-%, bezogen auf die Summe der Komponenten A + B, einer Hartkomponente aus einem oder mehreren Copolymerisaten von Styrol und/oder α-Methylstyrol mit Acrylnitril, wobei der Anteil an Acrylnitril 10 bis 50 Gew.-% beträgt, als Komponente A,

b: 0 bis 80 Gew.-%, bezogen auf die Summe der Komponenten A + B, mindestens eines Propfcopolymerisats B aus

    b1: 10 bis 90 Gew.-% mindestens einer kautschukelastischen teilchenförmigen Pfropfgrundlage mit einer Glasübergangstemperatur unter 0°C als Komponente B1 und

    b2: 10 bis 90 Gew.-% mindestens einer Pfropfauflage aus Polystyrol oder einem Copolymerisat von Styrol und/oder α-Methylstyrol mit Acrylnitril, wobei der Anteil an Acrylnitril 10 bis 50 Gew.-% beträgt, als Komponente B2,

    wobei die Summe der eingesetzten Komponenten A + B 10 bis 100 Gew.-Teile, bezogen auf die Gesamtmasse der eingesetzten Komponenten, beträgt,

c: 0,05 bis 5 Gew.-Teile, bezogen auf die Gesamtmasse der eingesetzten Komponenten, eines Schichtsilikats, als Komponente C,

d: 0 bis 90 Gew.-Teile, bezogen auf die Gesamtmasse der eingesetzten Komponenten, mindestens eines Polycarbonates als Komponente D,

e: 0 bis 20 Gew.-Teile, bezogen auf die Gesamtmasse der eingesetzten Komponenten, weiterer üblicher Hilfs- und Füllstoffe als Komponente E.

5. Verwendung nach Anspruch 4, **dadurch gekennzeichnet, daß** der Anteil an Acrylnitril in den Komponenten A und gegebenenfalls B2 der Styrolcopolymerisate weniger als 28 Gew.-%, bezogen auf die jeweils entsprechende Komponente beträgt.

6. Verwendung nach Anspruch 4, **dadurch gekennzeichnet, daß** der Anteil an Acrylnitril 18 bis 27 Gew.-% beträgt.

7. Thermoplastische Formmassen, aufgebaut aus den Komponenten A, C und gegebenenfalls B, D und E gemäß Anspruch 5 oder 6.

8. Verfahren zur Herstellung von Styrolpolymerisaten mit verbesserter Chemikalienbeständigkeit, aufgebaut aus den Komponenten A, C und gegebenenfalls B, D und E gemäß einem der Ansprüche 4 bis 6, **dadurch gekennzeichnet, daß** die Komponenten A, C und gegebenenfalls B, D und E separat hergestellt werden, die Komponente A mit der Komponente C vermengt und gegebenenfalls mit den Komponenten B, D und E innig vermischt und anschließend extrudiert wird.

**Claims**

1. The use of phyllosilicates for improving the chemicals resistance, reducing the swelling, and improving the stress-cracking resistance of styrene copolymers.

2. The use as claimed in claim 1, wherein the chemicals resistance is improved with respect to chemicals selected from alcohols, $C_3$-$C_8$ alkanes, gasoline, premium gasoline, diesel, halogenated hydrocarbons, hypochlorite salts, and sodium dichloroisocyanate dihydrate.

3. The use as claimed in claim 1 or 2, wherein the phyllosilicates used have been selected from kaolinite types, serpentine types, pyrophyllite, and silicates of mica type, and mica.

4. The use as claimed in any of claims 1 to 3, wherein the styrene copolymers have been built up from components A, C, and, where appropriate, B, D, and E, using:

a: as component A, from 20 to 100% by weight, based on the entirety of components A + B, of a hard component made from one or more copolymers of styrene and/or α-methylstyrene with acrylonitrile, the proportion of acrylonitrile being from 10 to 50% by weight,

b: from 0 to 80% by weight, based on the entirety of components A + B, of at least one graft copolymer B made from

b1: as component B1, from 10 to 90% by weight of at least one elastomeric particulate graft base with a glass transition temperature below 0°C, and

b2: as component B2, from 10 to 90% by weight of at least one graft made from polystyrene or from a copolymer of styrene and/or α- methylstyrene with acrylonitrile, the proportion of acrylonitrile being from 10 to 50% by weight,

where the entirety of the components A + B used is from 10 to 100 parts by weight, based on the total weight of the components used,

c: as component C, from 0.05 to 5 parts by weight, based on the total weight of the components used, of a phyllosilicate,

d: as component D, from 0 to 90 parts by weight, based on the total weight of the components used, of at least one polycarbonate, and

e: as component E, from 0 to 20 parts by weight, based on the total weight of the components used, of other conventional auxiliaries and fillers.

**5.** The use as claimed in claim 4, wherein the proportion of acrylonitrile in components A, and, where appropriate, B2 of the styrene copolymers is less than 28% by weight, based on each appropriate component.

**6.** The use as claimed in claim 4, wherein the proportion of acrylonitrile is from 18 to 27% by weight.

**7.** A thermoplastic molding composition built up from components A, C, and, where appropriate, B, D and E, as claimed in claim 5 or 6.

**8.** A process for preparing styrene polymers with improved chemicals resistance, built up from components A, C, and, where appropriate, B, D, and E, as claimed in any of claims 4 to 6, which comprises separately preparing A, C, and, where appropriate, B, D, and E, combining component A with component C, and intimately mixing and then extruding the same with components B, D, and E, as appropriate.

## Revendications

**1.** Utilisation de phyllosilicates pour améliorer la résistance aux produits chimiques, réduire le gonflement et améliorer la résistance à la fissuration sous contrainte de copolymères de styrène.

**2.** Utilisation selon la revendication 1, **caractérisée en ce que** la résistance aux produits chimiques est améliorée vis-à-vis de produits chimiques choisis parmi des alcools, des alcanes en $C_3$ à $C_8$, de l'essence, de l'essence super, du carburant diesel, des hydrocarbures halogénés, des sels d'hypochlorite et du dichloro-isocyanate de sodium d i hyd raté.

**3.** Utilisation selon la revendication 1 ou 2, **caractérisée en ce que** les phyllosilicates sont choisis parmi les types kaolinite, serpentine, pyrophyllite et silicates micacés, et le mica.

**4.** Utilisation selon l'une quelconque des revendications 1 à 3, **caractérisée en ce que** les copolymères de styrène sont constitués des composants A, C et éventuellement B, D et E, avec:

a: de 20 à 100% en poids, par rapport à la somme des composants A + B, d'un composant dur constitué d'un ou plusieurs copolymères de styrène et/ou d'α-méthylstyrène avec de l'acrylonitrile, la fraction d'acrylonitrile étant de 10 à 50% en poids, en tant que composant A,

b: de 0 à 80% en poids, par rapport à la somme des composants A + B, d'au moins un copolymère greffé B constitué de

b1: de 10 à 90% en poids d'au moins une base de greffage à élasticité de caoutchouc ayant une température de transition vitreuse de moins de 0°C en tant que composant B1 et

b2: de 10 à 90% en poids d'au moins une enveloppe de greffage constituée de polystyrène ou d'un copolymère de styrène et/ou d'α-méthylstyrène avec de l'acrylonitrile, la fraction d'acrylonitrile étant de 10 à 50% en poids, en tant que composant B2,

la somme des composants A + B mis en oeuvre totalisant de 10 à 100% en poids, par rapport à la masse totale des composants mis en oeuvre,

c: de 0,05 à 5 parties en poids, par rapport à la masse totale des composants mis en oeuvre, d'un phyllosilicate, en tant que composant C,

d: de 0 à 90 parties en poids, par rapport à la masse totale des composants mis en oeuvre, d'au moins un polycarbonate en tant que composant D,

e: de 0 à 20 parties en poids, par rapport à la masse totale des composants mis en oeuvre, d'autres adjuvants et matières de remplissage usuels en tant que composant E.

5.  Utilisation selon la revendication 4, **caractérisée en ce que** la fraction d'acrylonitrile dans les composants A et éventuellement B2 des copolymères de styrène est de moins de 28% en poids, par rapport au composant correspondant respectif.

6.  Utilisation selon la revendication 4, **caractérisé en ce que** la fraction d'acrylonitrile est de 18 à 27% en poids.

7.  Masses de moulage thermoplastiques, constituées des composants A, C et éventuellement B, D et E selon la revendication 5 ou 6.

8.  Procédé de préparation de polymères de styrène possédant une résistance améliorée aux produits chimiques, constitués des composants A, C et éventuellement B, D et E selon l'une quelconque des revendications 4 à 6, **caractérisé en ce que** les composants A, C et éventuellement B, D et E sont préparés séparément, que le composant A est intimement mélangé au composant C et éventuellement aux composés B, D et E et extrudé ensuite.